(19)

Europäisches
Patentamt
European
Patent Office
Office européen
des brevets

(11)   EP 2 919 510 A1

(12)   **EUROPEAN PATENT APPLICATION**

(43) Date of publication:
**16.09.2015 Bulletin 2015/38**

(21) Application number: **14000841.8**

(22) Date of filing: **10.03.2014**

(51) Int Cl.:
*H04W 28/02* (2009.01)     *H04L 12/813* (2013.01)
*H04L 12/825* (2013.01)     *H04L 12/819* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonaktiebolaget L M Ericsson (publ)**
**164 83 Stockholm (SE)**

(72) Inventors:
• **Reider, Norbert**
  **9111 Tényö (HU)**

• **Jonsson, Anders**
  **187 35 Täby (SE)**
• **Nádas, Szilveszter**
  **1192 Budapest (HU)**
• **Rácz, Sándor**
  **2700 Cegléd (HU)**

(74) Representative: **Röthinger, Rainer**
**Wuesthoff & Wuesthoff**
**Patentanwälte PartG mbB**
**Schweigerstrasse 2**
**81541 München (DE)**

(54)   **Technique for controlling bandwidth usage of an application using a radio access bearer on a transport network**

(57)   A technique for controlling bandwidth usage of an application using a Radio Access Bearer, RAB, on a Transport network, TN, is disclosed. In a method aspect, the method comprises obtaining statistical data indicative of data frames lost on the RAB. Moreover, a first momentary congestion bitrate is calculated from a number of data packets actually lost on the TN based on the received statistical data and a second momentary congestion bitrate is calculated from a number of data packets actually dropped due to a drop policy applied to the application. Accordingly, a bitrate to be applied to the application by the drop policy is calculated based on the first and second momentary congestion bitrates. Finally, the drop policy is updated based on the bitrate.

Fig. 3

EP 2 919 510 A1

**Description**

**Technical Field**

The present disclosure generally relates to controlling bandwidth usage of an application using a Radio Access Bearer (RAB) on a Transport network (TN). The techniques of the present disclosure may be embodied in a method, an apparatus and/or a data structure.

**Background**

In a Wireless Code Division Multiple Access (WCDMA) Radio Access Network (RAN), the Radio Network Controller (RNC) and the Node Bs are connected through a Transport Network (TN). In some deployments, however, the TN is a potential bottleneck. Without handling congestion on the TN, application level throughput and delay degradation may occur. Due to this, the TN bottleneck may cause unwanted and unnecessary application level degradation.

To overcome this effect, a congestion control method may be used in the WCDMA RAN to handle the TN bottleneck. An option for such a congestion control may reside in reusing the application level TCP congestion control. In this case, the TCP will decrease the bitrate of a flow by modifying e.g. the congestion window (cwnd) TCP internal variables. The congestion action may depend on the TCP version and on the application in general, e.g. how many TCP flows are used, whether there are any non-responsive flows e.g. over UDP, etc.

Moreover, a TN congestion control solution has been proposed where the application level TCP is reused to handle TN congestion. In this solution, when TN congestion is detected, the application level TCP is informed about the TN congestion e.g. by means of an application level IP packet drop. However, packet lost over the TN is automatically retransmitted by the Radio Link Control (RLC) Acknowledged Mode (AM) protocol used between the RNC and a User Equipment (UE).

The above method is known as Active Queue Management (AQM) based congestion control. In this solution, the Iub traffic of High Speed Downlink Packet Access (HSDPA) is rendered compatible to the Transmission Control Protocol (TCP). Accordingly, HSDPA RAN Transport network bottleneck buffers can be shared with other TCP congestion controlled traffic, e.g. Long Term Evolution (LTE) S1 user plane traffic. AQM based congestion control can be extended with optimized handling of RLC AM losses.

Still further, a framework is currently being developed, in which resource sharing among users or other aggregates can be controlled based on the amount of congestion generating packets. The effect of aggressive applications (to be described herein below) can be controlled by applying a policer to the amount of congestion generating packets. In this context, the so-called ConEx can be deployed to an Evolved Packet System (EPS). In this context, partial deployment has been proposed, due to which an end-host does not necessarily have to support ConEx, but it can be deployed in a given network, such as a mobile network.

A still further option for congestion control of HSPA RAN TN is a rate-based solution, where all flows are shaped to a given bitrate at the so-called edge of the network. Moreover, the shaping of the bitrate is changed based on congestion feedback.

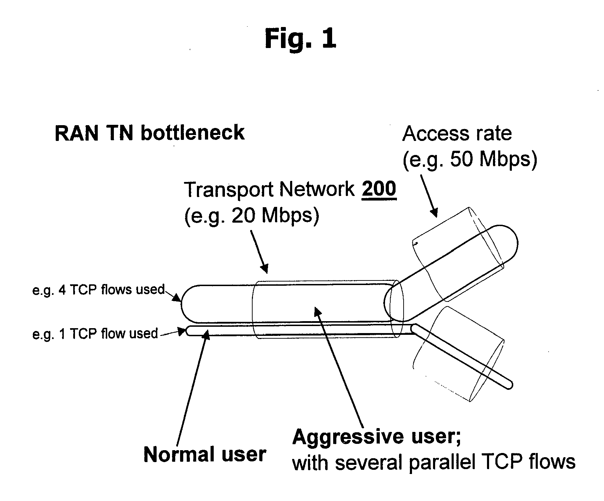

In this context, Fig. 1 shows a conventional TN 200 in an exemplary bottleneck situation. On the right-hand side of Fig. 1, two access rates up to e.g. 50 Mbps arrive at the TN 200 having a maximum throughput of e.g. 20 Mbps. In Fig. 1, two users share the TN 200, wherein one of the users is a normal user occupying e.g. only one TCP flow, whereas the other user is a so-called aggressive user occupying plural TCP flows (e.g. 4 TCP flows).

On the HSDPA RAN TN 20, such an aggressive application (or user) shall not dominate a normal application (or user) in terms of shared resources. Also the congestion situations shall be kept under control even if there are numerous aggressive applications. Moreover, also the behavior of the applications shall be kept TCP-compatible such that these applications shall be able to share the bottleneck with TCP congestion controlled applications.

Returning to the exemplary situation in Fig. 1, user A (the aggressive user) has e.g. 4 TCP flows and user B (the normal user) has only one TCP flow, then user A will experience four times higher bandwidth over the RAN transport network (potentially experiencing the bottleneck) than user B. In this case, packets from both users' flows will be dropped proportionally (e.g., 4 times more packets dropped for user A).

In the following, problems not hitherto realized by the prior art will be discussed.

In case of AQM based congestion control and a shared bottleneck, any aggressive application has a throttling effect on all other (TCP) flows sharing that bottleneck on the TN. An example for such a shared bottleneck may be the RAN transport network.

In general, when AQM based congestion control is used and a high percentage of Packet Data Units (PDUs) are lost within the RLC AM loop, then possible RLC AM retransmissions may cause even higher load in any bottleneck. If such a bottlenecked TN has a long buffer in addition to the overload, also RLC AM protocol problems may occur.

The above-described ConEx requires deployment in all servers to be working; such deployment, however, is time-consuming. In turn, partially deployed ConEx can be deployed in mobile systems only; however, it still requires signaling from Node Bs to the so-called shaping point, which is typically assumed to be in the Core Network. Such a signaling is not yet standardized, and therefore cross-vendor implementation is not possible. In addition, partially deployed ConEx is defined to be working on end-user PDUs, thus it cannot control e.g. the effect of RLC AM retransmissions.

Rate based congestion control solutions provide a way to have more controlled resources sharing and also to take into account the effect of RLC AM, but these algorithms are not compatible with TCP congestion control, and thus cannot be used e.g. over a shared TN bottleneck with LTE. These algorithms are also often complex, require high maintenance and might provide somewhat smaller utilization than the TCP congestion control based solutions.

## Summary

Accordingly, there is a need for an implementation of a scheme that avoids one or more of the problems discussed above, or other related problems.

In a first aspect, there is provided for a method for controlling bandwidth usage of an application using a Radio Access Bearer (RAB) on a Transport network (TN). The method comprises the step of obtaining statistical data indicative of data frames lost on the RAB. The method further comprises the step of calculating a first momentary congestion bitrate from a number of data packets actually lost on the TN based on the received statistical data. The method further comprises the step of calculating a second momentary congestion bitrate from a number of data packets actually dropped due to a drop policy applied to the application. The method further comprises the step of calculating a bitrate to be applied to the application by the drop policy based on the first and second momentary congestion bitrates. The method further comprises the step of updating the drop policy based on the bitrate. In this way, the resource usage of aggressive applications over the RAN TN, e.g. for HSDPA, is controlled.

In a first refinement of the first aspect, the obtaining step may comprise receiving a message containing the statistical data. In that case, the received message may be a Capacity Allocation Control Frame (CA CF) received from a base station, and the statistical data may be contained in a Spare Extension Information Element of the CA CF. Alternatively, the obtaining step may comprise calculating the statistical data based on status reports of the Radio Link Control (RLC). In both cases, the statistical data comprises on or more of one of a Sequence Number (SN) field and a Frame Sequence Number (FSN) of the received message, a number of the data frames lost within a predetermined time interval, a number of the data frames received within the predetermined time interval, and an average size of the data frames lost. Accordingly, the proposed scheme fits naturally to the HSDPA architecture by building on extensions of existing control frames. Thus, the proposed scheme is easy to implement.

In a second refinement of the first aspect, the step of calculating the first momentary congestion bitrate may comprise calculating the first momentary congestion bitrate as a number of the data frames lost within a predetermined time interval multiplied by an average size of the data frames lost divided by the predetermined time interval. Moreover, the step of calculating the second momentary congestion bitrate may comprise calculating the second momentary congestion bitrate as a number of bytes dropped divided by a predetermined time interval. When combining the two previous refinements, the step of calculating the bitrate to be applied may comprise calculating an average bitrate based on the first and second momentary congestion bitrates, and calculating the bitrate to be applied as the average bitrate minus a predetermined constant limit bitrate. In the latter case, calculating the average bitrate may comprise calculating the average bitrate as a moving average. Still further, the drop policy may comprise a Policer Token Bucket (PTB) and the step of updating the drop policy may comprise setting, if the bitrate to be applied is greater than 0, a bucket rate of the PTB to the bitrate to be applied, and a maximum bucket rate to the bitrate to be applied multiplied by the predetermined time interval. In this way, the resource usage is optimized on a statistical basis.

In a third refinement of the first aspect, the method may further comprise dropping an incoming data packet based on the updated drop policy. Further, the step of dropping may further comprise comparing a data packet size of the incoming data packet to a current bucket level, dropping the incoming data packet if comparison yields that the data packet size is smaller than the current bucket level, and updating the bucket level by subtracting the data packet size from the bucket level, and the number of bytes dropped by the drop policy by adding the data packet size to the previous number of bytes dropped. In this way, the dropping of data packets is performed as little as possible and as much as necessary.

In a fourth refinement of the first aspect, the method may further comprise determining whether a dropped data packet to be re-transmitted satisfies a predetermined criterion, allowing the re-transmission of the data packet if the predetermined criterion is not fulfilled, and prohibiting the re-transmission of the data packet if the predetermined criterion is fulfilled. The predetermined criterion may be a data packet size of the data packet to be re-transmitted being smaller than the current bucket level. In this way, the proposed scheme enables control of RLC AM retransmissions to avoid further amplification of congestion.

In a second aspect, there is provided a computer program product comprising program code portions for performing the method of the first aspect when the computer program product is executed on one or more computing devices. The computer program product may be stored on a computer readable recording medium.

In a third aspect, there is provided an apparatus for controlling bandwidth usage of an application using a Radio Access Bearer (RAB) on a Transport network (TN). The apparatus comprises a component configured to obtain statistical data indicative of data frames lost on the RAB. The apparatus further comprises a component configured to calculate a first momentary congestion bitrate from a number of data packets actually lost on the TN based on the received statistical data, a second momentary congestion bitrate from a number of data packets actually dropped due to a drop policy applied to the application, and a bitrate to be applied to the application by the drop policy based on the first and second momentary congestion bitrates. The apparatus further comprises a component configured to update the drop policy based on the bitrate.

In a fourth aspect, there is provided a data structure for controlling bandwidth usage of an application using a Radio Access Bearer (RAB) on a Transport network (TN). The data structure comprises a first field containing one of a Sequence Number (SN) field and a Frame Sequence Number (FSN) of the data structure, a second field containing a number of data frames lost within a predetermined time interval, a third field containing a number of the data frames received within the predetermined time interval, and a fourth field containing an average size of the data frames lost. Moreover, the data structure may be a Capacity Allocation Control Frame (CA CF) received from a base station, and the first to fourth fields may be contained in a Spare Extension Information Element of the CA CF.

Still further, it is to be noted that the method aspects may also be embodied on the apparatus of the third aspect comprising at least one processor and/or appropriate means or components for carrying out any one of the method steps.

**Brief Description of the Drawings**

The embodiments of the technique presented herein are described herein below with reference to the accompanying drawings, in which:

Fig. 1    shows a conventional TN 200 in an exemplary bottleneck situation;

Fig. 2    shows components comprised in an exemplary device embodiment realized in the form of an apparatus (which may reside e.g. one of an RNC and an RBS);

Fig. 3    shows a method embodiment which also reflects the interaction between the components of the apparatus embodiment;

Fig. 3A    shows a first example of the method embodiment residing e.g. in the RBS;

Fig. 3B    shows a second example of the method embodiment residing e.g. in a congestion bitrate calculation module;

Fig. 3C    shows a third example of the method embodiment residing e.g. in a Policer Token Bucket module;

Fig. 3D    shows a fourth example of the method embodiment residing e.g. in the Policer Token Bucket module; and

Fig. 4    shows a data structure embodiment.

**Detailed Description**

In the following description, for purposes of explanation and not limitation, specific details are set forth (such as particular signalling steps) in order to provide a thorough understanding of the technique presented herein. It will be apparent to one skilled in the art that the present technique may be practiced in other embodiments that depart from these specific details. For example, the embodiments will primarily be described in the context of HSDPA; however, this does not rule out the use of the present technique in connection with (future) technologies consistent with HSDPA, be it a wirebound communications network or a wireless communications network.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a field programmable gate array (FPGA) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

Without loss of generality, in the proposed solution, the bandwidth usage of an aggressive application over the RAN Transport Network of HSDPA systems is controlled. An application contributing to the transport network congestion with large extent shall experience higher packet drop rate than an application having relatively low contribution to congestion. This mechanism may be achieved by collecting statistics of congestion in the RBS and signalling that to the RNC using e.g. Iub Framing Protocol Control Frames. Based on the signalled statistics, a dropper token bucket is maintained in the RNC per RAB. When the dropper bucket has enough tokens, then an incoming RLC SDU is dropped.

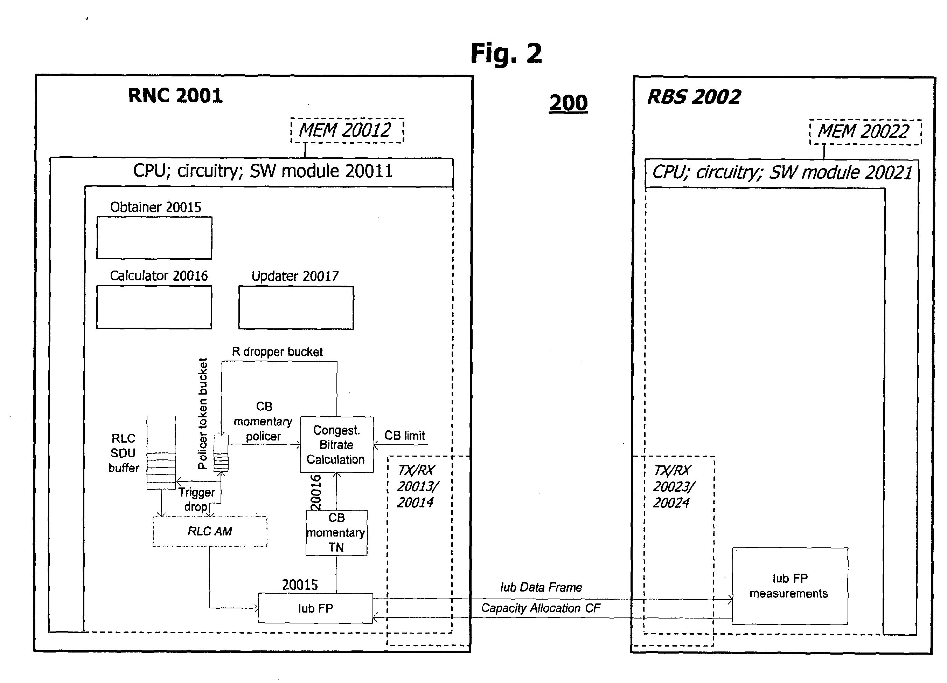

Fig. 2 shows components comprised in an exemplary device embodiment realized in the form of the RNC 2001 and/or a Radio Base Station (RBS) 2002. As shown in Fig. 2, the RNC 2001 comprises a core functionality (e.g., one or more of a Central Processing Unit (CPU), dedicated circuitry and/or a software module) 20011, an optional memory (and/or database) 20012, an optional transmitter 20013 and an optional receiver 20014. Moreover, the RNC 2001 comprises an obtainer 20015, a calculator 20016 and an updater 20017.

Moreover, the RBS 2002 may comprise a core functionality (e.g., one or more of a Central Processing Unit (CPU), dedicated circuitry and/or a software module) 20021, an optional memory (and/or database) 20022, an optional transmitter 20023 and an optional receiver 20024.

In the following paragraphs, assume that x = 1 or 2 (for the RNC 2001 or the RBS 2002). As partly indicated by the dashed extensions of the functional block of the CPU 200x1, the obtainer 20015, the calculator 20016 and the updater 20017 (of the RNC 2001) as well as the memory 200x1, the transmitter 200x3 and the receiver 200x4 may at least partially be functionalities running on the CPU 200x2, or may alternatively be separate functional entities or means controlled by the CPU 200x1 and supplying the same with information. The transmitter and receiver components 200x3, 200x4 may be realized to comprise suitable interfaces and/or suitable signal generation and evaluation functions.

The CPU 200x1 may be configured, for example, using software residing in the memories 200x2, to process various data inputs and to control the functions of the memories 200x2, the transmitter 200x3 and the receiver 200x3 (as well as the obtainer 20015, the calculator 20016 and the updater 20017 (of the RNC 2001)). The memory 200x2 may serve for storing program code for carrying out the methods according to the aspects disclosed herein, when executed by the CPU 200x1.

It is to be noted that the transmitter 200x3 and the receiver 200x4 may be provided as an integral transceiver, as is indicated in Fig. 2. It is further to be noted that the transmitters/receivers 200x3, 200x4 may be implemented as physical transmitters/receivers for transceiving via an air interface or a wired connection, as routing/forwarding entities/interfaces between network elements, as functionalities for writing/reading information into/from a given memory area or as any suitable combination of the above. At least one of the obtainer 20015, the calculator 20016 and the updater 20017 (of the RNC 2001), or the respective functionalities, may also be implemented as a chipset, module or subassembly.

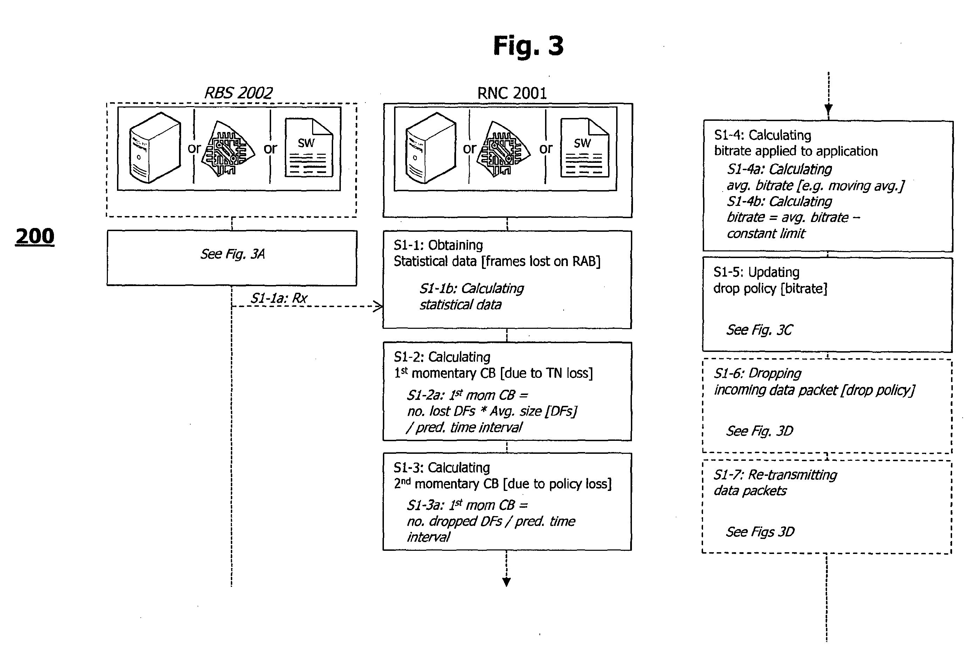

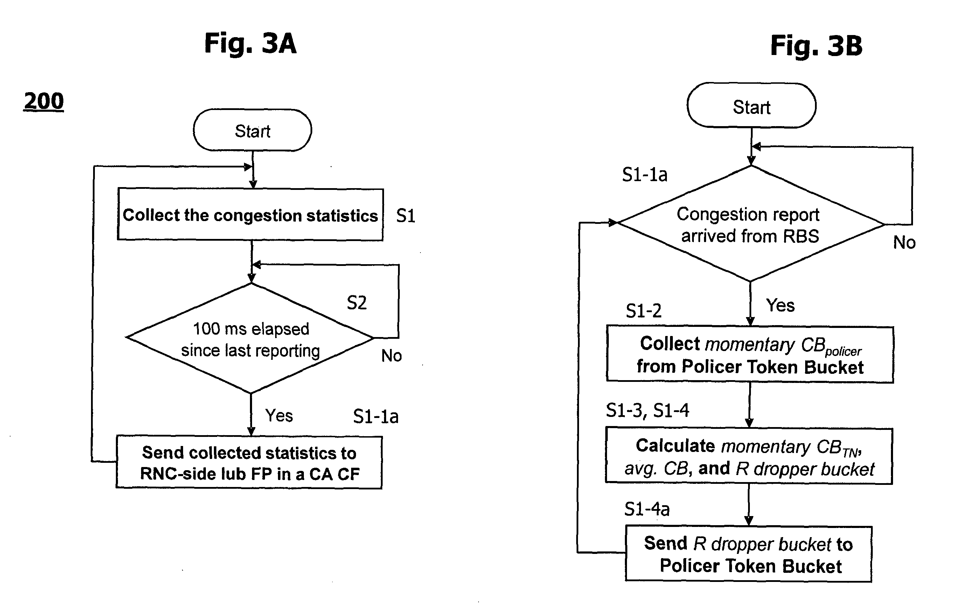

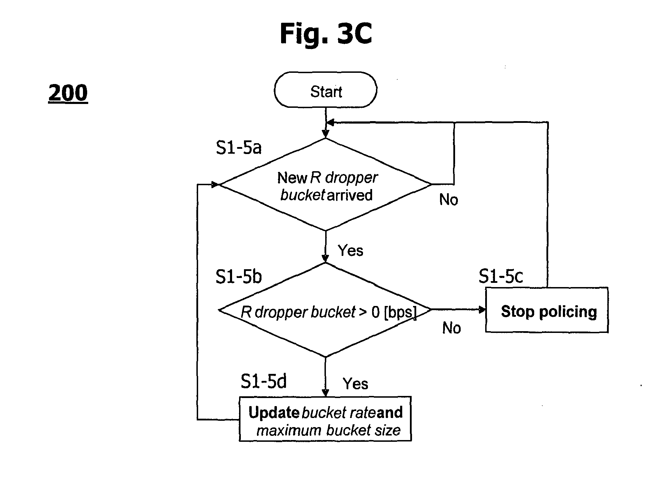

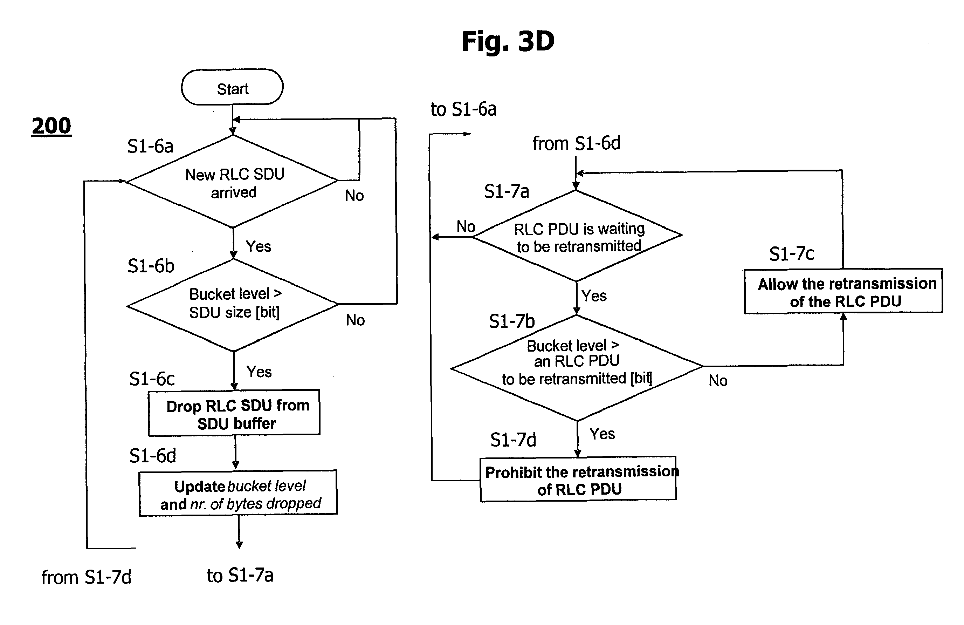

Fig. 3 shows a method embodiment which also reflects the interaction between the components of the device embodiment; Fig. 3B shows a second example of the method embodiment residing e.g. in a congestion bitrate calculation module. In the signalling diagram of Fig. 3, time aspects between signalling are reflected in the vertical arrangement of the signalling sequence as well as in the sequence numbers. It is to be noted that the time aspects indicated in Fig. 3 do not necessarily restrict any one of the method steps shown to the step sequence outlined in Fig. 3. This applies in particular to method steps that are functionally disjunctive with each other. For instance, the calculating steps S1-2 and S1-3 may be performed in the given order, in a reversed order or also (substantially) simultaneously.

In a first step S1-1, the obtainer 20015 of the RNC 2001 performs obtaining statistical data indicative of data frames lost on the RAB. In this context, Fig. 3A shows a first example of the method embodiment residing e.g. in the RBS 2002.

As a first alternative, in an optional step S1-1a, the obtainer 20115 and the receiver 20014 of the RNC 2001 perform receiving a message containing the statistical data. For instance, in the RBS 2002 (or node B in 3GPP terminology), a simple functionality may be introduced which is able to collect statistics about the missing Iub FP data frames (DFs) (step S1 in Fig. 3A). The statistics may be reported periodically, e.g., in every 100 ms (step S2 in Fig. 3A), or conditionally based on some thresholds on the measured metric to the RNC 2001.

Still further, the received message may be a Capacity Allocation Control Frame, CA CF, received from a base station, i.e. the RBS 2002. Further, the statistical data may be contained in a Spare Extension Information Element of the CA CF. The detection of missing DFs may be performed by using the Frame Sequence Number (FSN) field of the DFs. And, the statistics may be fed back to the RNC-side Iub Framing Protocol (FP) via, e.g., the Spare Extension Information Element (IE) of the CA CF.

As a second alternative, in an optional step S1-1b, the calculator 20116 of the RNC 2001 performs calculating the statistical data based on status reports of the Radio Link Control, RLC.

In both the first and second alternatives, the statistical data may comprise on or more of the following:

- A Sequence Number, SN, field or a Frame Sequence Number, FSN, of the received message.
- A number of the data frames lost within a predetermined time interval (e.g. per 100 ms).

- A number of the data frames received within the predetermined time interval.
- An average size of the data frames lost.

Then, in step S1-2, the calculator 20016 of the RNC 2001 performs calculating a first momentary congestion bitrate from a number of data packets actually lost on the TN based on the received statistical data. In an optional step S1-2a, the calculator 20016 of the RNC 2001 performs calculating the first momentary congestion bitrate as a number of the data frames lost within a predetermined time interval multiplied by an average size of the data frames lost divided by the predetermined time interval.

In other words, the RNC-side Iub FP may forward the statistical information to a Congestion Bitrate Calculation (CBC) module, where the so-called congestion bitrate (CB) is calculated based on the feedback from the RBS 2002. The congestion bitrate may express the rate of the packets that have been lost due to congestion (measured in bit/sec). That is, if the reports are sent to the RNC-side Iub FP periodically e.g., in every 100 ms, then the congestion bitrate for the RAN TN may be calculated as follows.

$$momentary\ CB_{TN}[bps] = \frac{Nr.\ of\ DFs\ lost * avg.DF\ size\ [byte] * 8\ [bit/byte]}{0.1\ [s]}$$

Alternatively, a simple functionality in the RBS can compute the momentary congestion bitrate and feedback this information in the CA CF to the RNC-side Iub FP. The statistics might be sent based on conditions, e.g., only if the momentary CB is over a threshold (not necessarily the same threshold as the CB limit [bit/s], as will be described herein below).

Then, in step S1-3, the calculator 20016 of the RNC 2001 performs calculating a second momentary congestion bitrate from a number of data packets actually dropped due to a drop policy applied to the application. In an optional step S1-3a, the calculator 20016 of the RNC 2001 performs calculating the second momentary congestion bitrate as a number of bytes dropped divided by a predetermined time interval.

As an example, the second momentary CB of a policer may express the instantaneous bitrate calculated from the number of actually dropped RLC SDUs by a Policer Token Bucket, e.g. by the following expression:

$$momentary\ CB_{policer}[bps] = \frac{bytes\ dropped\ by\ policer * 8\ [bit/byte]}{0.1\ [s]}.$$

Still further, in step S1-4, the calculator 20016 of the RNC 2001 performs calculating a bitrate to be applied to the application by the drop policy based on the first and second momentary congestion bitrates. In an optional step S1-4a, the calculator 20016 of the RNC 2001 performs calculating an average bitrate based on the first and second momentary congestion bitrates.

In other words, the CBC module may also calculate the average CB. As an example, the average CB can be calculated (but not limited to) using an exponential moving average, such as

$$avg.\ CB = (1 - \beta) * avg.CB + \beta * \left(momentary\ CB_{TN} + momentary\ CB_{policer}\right),$$

where β is the parameter of the moving average, e.g., β = 0.25. The moving average calculation of the congestion bitrate (avg. CB) may help to spread the short-term deviations in the momentary CB measurement in time, and may accordingly smooth the drop rate e.g. in the Policer Token Bucket (PTB).

Then, in an optional step S1-4b, the calculator 20016 of the RNC 2001 performs calculating the bitrate to be applied as the average bitrate minus a predetermined constant limit bitrate.

In other words, the CBC may calculate the bit rate that the PTB should apply as the drop rate by the following expression:

$$R\ dropper\ bucket\ [bps] = avg.CB\ [bps] - CB\ limit\ [bps],$$

where CB limit is a predefined constant measured in bps.

Finally, in step S1-5, the updater 20017 of the RNC 2001 performs updating the drop policy base on the bitrate. Fig. 3C shows a third example of the method embodiment residing e.g. in a Policer Token Bucket module.

For instance, the value of R dropper bucket is sent to the PTB (step S1-5a in Fig. 3C). If the value of R token bucket is equal to or below 0 (step S1-5b in Fig. 3C), then policing is stopped (step S1-5c in Fig. 3C).

Then, in an optional step S1-5d, the step of updating the drop policy may comprise setting, if the bitrate to be applied is greater than 0, a bucket rate of the PTB to the bitrate to be applied, and a maximum bucket rate to the bitrate to be applied multiplied by the predetermined time interval.

For example, the rate by which the tokens are generated in the token bucket (bucket rate) is set to R token bucket [bps], and the maximum bucket size [bit] is adjusted to R token bucket [bps]* 0.1[s]. The initial size of the token bucket may be set e.g., to 1500 [byte], which means that PTB can start dropping RLC SDUs immediately. Every time R token bucket changes, the bucket rate and the maximum bucket size need to be updated accordingly (see Fig. 3C, loop from step S1-5d to S1-5a). When the tokens in the bucket are above the maximum token size, then no more tokens will be added to the bucket.

Still further, in an optional step S1-6, the RNC 2001 performs dropping an incoming data packet based on the updated drop policy. Fig. 3D shows a fourth example of the method embodiment residing e.g. in the Policer Token Bucket module.

In more detail, the step of dropping may further comprise the following substeps: if a data packet has arrived (substep S1-6a), a substep S1-6b of comparing a data packet size of the incoming data packet to a current bucket level, a substep S1-6c of dropping the incoming data packet if comparison yields that the data packet size is smaller than the current bucket level, and a substep S1-6d of updating the bucket level by subtracting the data packet size from the bucket level, and the number of bytes dropped by the drop policy by adding the data packet size to the previous number of bytes dropped.

In other words, the PTB may be responsible for the policing by dropping RLC SDUs according to the bucket size. That is, if an RLC SDU (i.e., an IP packet) arrives at the SDU buffer and the bucket level of PTB [bits] > size of the RLC SDU [bits], then the RLC SDU is dropped, and the bucket level and the number of bytes dropped by the policer are updated such that

$$bucket\ level = bucket\ level - SDU\ size\ [byte] * 8\ [bit/byte]$$
$$- estimated\ SDU\ header\ [bit],$$

$$nr.of\ bytes\ dropped\ by\ policer +$$
$$= SDU\ size\ [byte] + estimated\ SDU\ header\ [byte].$$

In addition to the above-described scheme according to the present disclosure, in an optional step S1-7, dropped data packets may be re-transmitted under certain circumstances. In an optional substep S1-7b, if there are any data packets to be retransmitted (substep S1-7a), it is determined whether a dropped data packet to be re-transmitted satisfies a predetermined criterion. Further, in an optional substep S1-7c, the re-transmission of the data packet is allowed if the predetermined criterion is not fulfilled, in an optional substep S1-7d, the re-transmission of the data packet is prohibited if the predetermined criterion is fulfilled. The predetermined criterion may be a data packet size of the data packet to be re-transmitted being smaller than the current bucket level.

As an example, in case the RNC-side RLC AM wants to retransmit an RLC PDU (step S1-7a), it checks the status of the bucket in the PTB module (step S1-7b). If the size of the bucket is equal to or larger than the size of the RLC PDU, then the retransmission is prohibited (step S1-7d). However, re-transmission can be executed, only when the bucket level becomes smaller than the size of the PDU (step S1-7d). When retransmission is allowed, as an option, first-time retransmissions (i.e., PDUs that are about to be retransmitted for the first time) may be prioritized over the data packets that have been retransmitted the longest time ago.

As a further option concerning the statistical data to be obtained, in case a CA CF message containing the proposed congestion statistics is lost (and this fact is detected based on the sequence number field (4 bits) of the message), the CBC module may assume that the congestion bitrate is the same as it was in the last interval (e.g. 0.1 second ago), and the module can execute the same process as in the normal case, i.e., when no missing CA CF is detected.

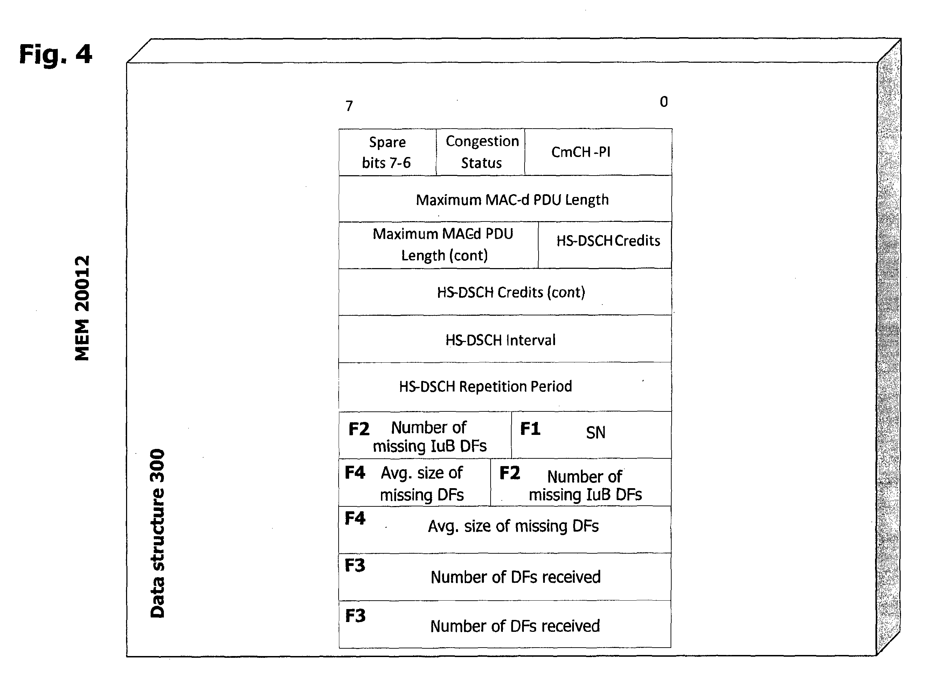

Finally, Fig. 4 shows a data structure embodiment. In particular, Fig. 4 shows a data structure 300 for controlling bandwidth usage of an application using a RAB on a TN 200. The data structure comprises a first field F1 containing one of a Sequence Number, SN, field and a Frame Sequence Number, FSN, of the data structure, a second field F2 containing a number of data frames lost within a predetermined time interval, a third field F3 containing a number of the data frames received within the predetermined time interval, and a fourth field F4 containing an average size of the data frames lost. As a refinement, the data structure may be a Capacity Allocation Control Frame, CA CF received from a base station, and the first to fourth fields F1 to F4 may be contained in a Spare Extension IE of the CA CF. The size of Spare Extension IE can very between 0 and 32 bytes.

As an option, the sequence number field F1 (having e.g. 4 bits) may enable loss detection of CA CF messages in the RNC-side Iub FP. Still further, the number of missing Iub data frames in field F2 within a time interval, e.g., in 100 ms may have 9 bits. Further, the field F4 for the average size of DFs lost may have 11 bits, since the size of DFs can be different. Finally, the field F3 the number of DFs received may have 16 bits and may optionally be used for loss percentage and congestion bitrate calculations in the RNC-side Iub FP.

Herein above, the proposed scheme according to the present disclosure has been described, fully enabling the person skilled in the art to carry out the present disclosure. For the purpose of illustration rather than limitation, the following use case will be described.

It is assumed that two UEs share the bottlenecked RAN TN 200. One UE uses e.g. the Web (flow1), and the other UE has an FTP download (flow2). The CB limit is set to 10 kbps for each UE (bearer), and β is set to 0.25.

Based on the RBS congestion reports, the CBC module of flow1 calculates a momentary congestion bitrate of 3 kbps, while the momentary CB of flow2 is evaluated to 70 kbps. The PTB has already been using 40 kbps for policing of flow2, but no policing is applied to flow1. The average CBs of the previous 100-ms-interval for flow1 and flow2 were determined to 2.1 and 50 kbps, respectively. Accordingly, the average CB of flow1 and flow2 are calculated as follows.

$$avg.\ CB_{flow1} = 0.75 * 2.1\ [kbps] + 0.25 * (3\ [kbps] + 0\ [kbps]) = 2.325\ kbps$$

$$avg.\ CB_{flow2} = 0.75 * 50\ [kbps] + 0.25 * (70\ [kbps] + 40\ [kbps]) = 65\ kbps$$

As a result, the R token bucket values are -7.675 kbps and 55 kbps for flow1 and flow2, respectively. This means that for flow1, no policing is applied, while in case of flow2, the Policer Token Bucket module will update the bucket rate to 55 kbps and the maximum bucket size to 55 [kbps] * 0.1 [s] = 5.5 kilobits.

In the following, some possible options implementable for the present disclosure will be outlined.

  1) Loss statistics due to air interface congestion may be supplemented, so that the proposed solution works for air interface related congestion as well. Here, two options for such mechanism are proposed.

  • Option 1: The RBS 2002 (e.g. Node B) "destroys" the RLC PDUscausing the congestion and reports them as a part of the congestion report in a CA CF to the RNC-side RLC which can skip the retransmission for those RLC PDUs.
  • Option 2: To the RNC-side RLC, only the congestion generating RLC PDUs are fed back, but no discarding is performed in the RBS 2002. This is option may be easier to implement and can achieve similar efficiency.

  2) As an alternative to policing, shaping in the RNC can be applied. For example, if 100 kbit of data has been dropped out of 1 Mbit, then the same effect can be achieved using shaping of the flow to 900 kbps rather than with applying policing with CB of 100 kbps.

This can be done by using a token bucket that allows the transmission of an RLC SDU or the retransmission of the RLC PDU if there are enough tokens in the bucket. The bucket rate is set to (rate measured [bps] - R dropper bucket [bps]), e.g., 1000 kbps - 100 kbps = 900 kbps. In order to perform shaping instead of policing, there is a need for buffering the packets before the shaping takes place. Furthermore, AQM is also required to manage the length of the queue (i.e. it drops packets if the queue is larger than a threshold).

In the RLC, the SDU buffer is available for buffering the packets for shaping, thus this option can be directly applied in HSDPA. The shaping has the advantage of being more accurate. For example, in case of TCP, if the congestion window suddenly halved from 1000 kbps to 500 kbps and shaping is performed to 900 kbps, then the flow will be untouched, and it is slowed down to 500 kbps, while the case of policing (dropping RLC SDU based on congestion bitrate) requires some time, e.g., 100 ms to notice changes in the congestion bitrate, and to adapt the policing accordingly.

Optionally, the shaper can be placed into the MAC-d layer where a buffer is also available for shaping. The bucket rate is set in the same way as in case of shaping in the RLC. Similarly to the previous option, AQM is also required to handle queue length properly.

3) As an alternative to transmission of feedback on the congestion statistics sent by the RBS 2002 to the RNC 2001, similar information can be calculated in the RNC-side RLC based on the RLC status reports. The RNC-side RLC is aware of the sent and lost RLC PDUs using the RLC status reports, and thereby, it is able to determine the congestion bitrate.

In this case there is no need to send congestion information back to the RNC 2001, though it may have larger latency depending on the interval of the RLC status reports and results in a more complex solution. In order to distinguish where in the transmission chain the data was lost, the RBS can - via proprietary signaling in the uplink frame protocol - indicate the downlink HARQ status and if any downlink HARQ failures have occurred during a predefined measurement period. This information can then be used to determine an improved picture of the congestion statistics, since it is the possible to determine if the losses indicated by the UE in the RLC status report stem from radio interface or TN issues, since an absence of HARQ failure indications from the RBS during the predefined measurement period implies that the loss was due to TN congestion.

The present disclosure provides one or more of the following advantages:

- Controlling the resource usage of aggressive applications over the RAN TN for HSDPA
- Enabling control of resource sharing among RABs
- Enabling control of RLC AM retransmissions to avoid further amplification of congestion
- Fitting naturally to the HSDPA architecture, builds on extension of existing control frames. Therefore, the proposed scheme is easy to implement.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

**Claims**

1. A method for controlling bandwidth usage of an application using a Radio Access Bearer, RAB, on a Transport network, TN (200), the method comprising the steps of:

   obtaining (S1-1) statistical data indicative of data frames lost on the RAB;
   calculating (S1-2) a first momentary congestion bitrate from a number of data packets actually lost on the TN based on the received statistical data;
   calculating (S1-3) a second momentary congestion bitrate from a number of data packets actually dropped due to a drop policy applied to the application;
   calculating (S1-4) a bitrate to be applied to the application by the drop policy based on the first and second momentary congestion bitrates; and
   updating (S1-5) the drop policy based on the bitrate.

2. The method according to claim 1, wherein:

   the obtaining step comprises receiving (S1-1a) a message containing the statistical data.

3. The method according to claim 2, wherein:

   the received message is a Capacity Allocation Control Frame, CA CF, received from a base station; and
   the statistical data is contained in a Spare Extension Information Element of the CA CF.

4. The method according to claim 1, wherein:

   the obtaining step comprises calculating (S1-1b) the statistical data based on status reports of the Radio Link Control, RLC.

5. The method according to any one of claims 1 to 4, wherein the statistical data comprises on or more of:

   one of a Sequence Number, SN, field and a Frame Sequence Number, FSN, of the received message;
   a number of the data frames lost within a predetermined time interval;
   a number of the data frames received within the predetermined time interval;
   and
   an average size of the data frames lost.

6. The method according to any one of claims 1 to 4, wherein the step of calculating the first momentary congestion bitrate comprises calculating (S1-2a) the first momentary congestion bitrate as a number of the data frames lost within a predetermined time interval multiplied by an average size of the data frames lost divided by the predetermined time interval.

7. The method according to any one of claims 1 to 4 or 6, wherein the step of calculating the second momentary congestion bitrate comprises calculating (S1-3a) the second momentary congestion bitrate as a number of bytes dropped divided by a predetermined time interval.

8. The method according to claims 6 and 7, wherein the step of calculating the bitrate to be applied comprises:

   calculating (S1-4a) an average bitrate based on the first and second momentary congestion bitrates; and
   calculating (S1-4b) the bitrate to be applied as the average bitrate minus a predetermined constant limit bitrate.

9. The method according to claim 8, wherein calculating the average bitrate comprises calculating the average bitrate as moving average.

10. The method according to claim 8 or 9, wherein the drop policy comprises a Policer Token Bucket, PTB, and wherein the step of updating the drop policy comprises:

    setting (S1-5d), if the bitrate to be applied is greater than 0:

       - a bucket rate of the PTB to the bitrate to be applied, and
       - a maximum bucket rate to the bitrate to be applied multiplied by the predetermined time interval.

11. The method according to any one of claims 1 to 5, further comprising:

    dropping (S1-6) an incoming data packet based on the updated drop policy.

12. The method according to claims 10 and 11, wherein the step of dropping further comprises:

    comparing (S1-6b) a data packet size of the incoming data packet to a current bucket level;
    dropping (S1-6c) the incoming data packet if comparison yields that the data packet size is smaller than the current bucket level; and
    updating (S1-6d):

       - the bucket level by subtracting the data packet size from the bucket level,
       and
       - the number of bytes dropped by the drop policy by adding the data packet size to the previous number of bytes dropped.

13. The method according to any one of claims 1 to 5, further comprising:

    determining (S1-7b) whether a dropped data packet to be re-transmitted satisfies a predetermined criterion;
    allowing (S1-7c) the re-transmission of the data packet if the predetermined criterion is not fulfilled; and

prohibiting (S1-7d) the re-transmission of the data packet if the predetermined criterion is fulfilled.

14. The method according to claims 12 and 13, wherein the predetermined criterion is a data packet size of the data packet to be re-transmitted being smaller than the current bucket level.

15. A computer program product comprising program code portions for performing the method of any one of the preceding claims when the computer program product is executed on one or more computing devices, the computer program product being preferably stored on a computer readable recording medium.

16. An apparatus (2001) for controlling bandwidth usage of an application using a Radio Access Bearer, RAB, on a Transport network, TN (200), the apparatus comprising:

a component (20015) configured to obtain statistical data indicative of data frames lost on the RAB;
a component (20016) configured to calculate:

- a first momentary congestion bitrate from a number of data packets actually lost on the TN based on the received statistical data,
- a second momentary congestion bitrate from a number of data packets actually dropped due to a drop policy applied to the application, and
- a bitrate to be applied to the application by the drop policy based on the first and second momentary congestion bitrates; and

a component (20017) configured to update the drop policy based on the bitrate.

17. A data structure (300) for controlling bandwidth usage of an application using a Radio Access Bearer, RAB, on a Transport network, TN (200), the data structure comprising:

a first field (F1) containing one of a Sequence Number, SN, field and a Frame Sequence Number, FSN, of the data structure;
a second field (F2) containing a number of data frames lost within a predetermined time interval;
a third field (F3) containing a number of the data frames received within the predetermined time interval; and
a fourth field (F4) containing an average size of the data frames lost.

18. The data structure according to claim 17, wherein:

the data structure is a Capacity Allocation Control Frame, CA CF, received from a base station; and
the first to fourth fields are contained in a Spare Extension Information Element of the CA CF.

**Amended claims in accordance with Rule 137(2) EPC.**

1. A method for controlling bandwidth usage of an application using a Radio Access Bearer, RAB, on a Transport network, TN (200), the method comprising the steps of:

obtaining (S1-1) statistical data indicative of missing Iub Framing Protocol, FP, data frames;
calculating (S1-2) a first momentary congestion bitrate, from a number of data packets actually lost on the TN based on the received statistical data, as a number of the Iub FP data frames lost within a predetermined time interval multiplied by an average size of the Iub FP data frames lost divided by the predetermined time interval;
calculating (S1-3) a second momentary congestion bitrate, from a number of data packets actually dropped due to a drop policy applied to the application, as a number of bytes dropped divided by the predetermined time interval;
calculating (S1-4) a congestion bitrate to be applied to the application by the drop policy based on the first and second momentary congestion bitrates; and
updating (S1-5) the drop policy based on the congestion bitrate.

2. The method according to claim 1, wherein:

the obtaining step comprises receiving (S1-1a) a message containing the statistical data.

3. The method according to claim 2, wherein:

   the received message is a Capacity Allocation Control Frame, CA CF, received from a base station; and
   the statistical data is contained in a Spare Extension Information Element of the CA CF.

4. The method according to claim 1, wherein:

   the obtaining step comprises calculating (S1-1b) the statistical data based on status reports of the Radio Link Control, RLC.

5. The method according to any one of claims 1 to 4, wherein the statistical data comprises on or more of:

   one of a Sequence Number, SN, field and a Frame Sequence Number, FSN, of the received message;
   a number of the Iub FP data frames lost within a predetermined time interval;
   a number of the Iub FP data frames received within the predetermined time interval; and
   an average size of the Iub FP data frames lost.

6. The method according to claim 1, wherein the step of calculating the bitrate to be applied comprises:

   calculating (S1-4a) an average bitrate based on the first and second momentary congestion bitrates; and
   calculating (S1-4b) the congestion bitrate to be applied as the average bitrate minus a predetermined constant limit bitrate.

7. The method according to claim 6, wherein calculating the average bitrate comprises calculating the average bitrate as moving average.

8. The method according to claim 6 or 7, wherein the drop policy comprises a Policer Token Bucket, PTB, and wherein the step of updating the drop policy comprises:

   setting (S1-5d), if the congestion bitrate to be applied is greater than 0:

   - a bucket rate of the PTB to the congestion bitrate to be applied, and
   - a maximum bucket rate to the congestion bitrate to be applied multiplied by the predetermined time interval.

9. The method according to any one of claims 1 to 5, further comprising:

   dropping (S1-6) an incoming data packet based on the updated drop policy.

10. The method according to claims 8 and 9, wherein the step of dropping further comprises:

    comparing (S1-6b) a data packet size of the incoming data packet to a current bucket level;
    dropping (S1-6c) the incoming data packet if comparison yields that the data packet size is smaller than the current bucket level; and
    updating (S1-6d):

    - the bucket level by subtracting the data packet size from the bucket level,
    and
    - the number of bytes dropped by the drop policy by adding the data packet size to the previous number of bytes dropped.

11. The method according to any one of claims 1 to 5, further comprising:

    determining (S1-7b) whether a dropped data packet to be re-transmitted satisfies a predetermined criterion;
    allowing (S1-7c) the re-transmission of the data packet if the predetermined criterion is not fulfilled; and
    prohibiting (S1-7d) the re-transmission of the data packet if the predetermined criterion is fulfilled.

12. The method according to claims 10 and 11, wherein the predetermined criterion is a data packet size of the data packet to be re-transmitted being smaller than the current bucket level.

13. A computer program product comprising program code portions for performing the method of any one of the preceding claims when the computer program product is executed on one or more computing devices, the computer program product being preferably stored on a computer readable recording medium.

14. An apparatus (2001) for controlling bandwidth usage of an application using a Radio Access Bearer, RAB, on a Transport network, TN (200), the apparatus comprising:

> a component (20015) configured to obtain statistical data indicative of missing Iub Framing Protocol, FP, data frames;
> a component (20016) configured to calculate:
>
>> - a first momentary congestion bitrate, from a number of data packets actually lost on the TN based on the received statistical data, as a number of the Iub FP data frames lost within a predetermined time interval multiplied by an average size of the Iub FP data frames lost divided by the predetermined time interval,
>> - a second momentary congestion bitrate, from a number of data packets actually dropped due to a drop policy applied to the application, as a number of bytes dropped divided by the predetermined time interval, and
>> - a bitrate to be applied to the application by the drop policy based on the first and second momentary congestion bitrates; and
>
> a component (20017) configured to update the drop policy based on the bitrate.

15. A data structure (300) for controlling bandwidth usage of an application using a Radio Access Bearer, RAB, on a Transport network, TN (200), the data structure comprising:

> a first field (F1) containing one of a Sequence Number, SN, field and a Frame Sequence Number, FSN, of the data structure;
> a second field (F2) containing a number of Iub Framing Protocol, FP, data frames lost within a predetermined time interval;
> a third field (F3) containing a number of the Iub FP data frames received within the predetermined time interval; and
> a fourth field (F4) containing an average size of the Iub FP data frames lost.

16. The data structure according to claim 15, wherein:

> the data structure is a Capacity Allocation Control Frame, CA CF, received from a base station; and
> the first to fourth fields are contained in a Spare Extension Information Element of the CA CF.

# Fig. 1

**RAN TN bottleneck**

Access rate
(e.g. 50 Mbps)

Transport Network **200**
(e.g. 20 Mbps)

e.g. 4 TCP flows used

e.g. 1 TCP flow used

**Normal user**

**Aggressive user;**
with several parallel TCP flows

EP 2 919 510 A1

**Fig. 2**

200

# Fig. 3

**200**

*RBS 2002*

See Fig. 3A

*S1-1a: Rx*

*RNC 2001*

**S1-1: Obtaining**
Statistical data [frames lost on RAB]

*S1-1b: Calculating statistical data*

**S1-2: Calculating**
1st momentary CB [due to TN loss]

*S1-2a: 1st mom CB = no. lost DFs * Avg. size [DFs] / pred. time interval*

**S1-3: Calculating**
2nd momentary CB [due to policy loss]

*S1-3a: 1st mom CB = no. dropped DFs / pred. time interval*

**S1-4: Calculating**
bitrate applied to application

*S1-4a: Calculating avg. bitrate [e.g. moving avg.]*
*S1-4b: Calculating bitrate = avg. bitrate – constant limit*

**S1-5: Updating**
drop policy [bitrate]

See Fig. 3C

*S1-6: Dropping incoming data packet [drop policy]*

See Fig. 3D

*S1-7: Re-transmitting data packets*

See Figs 3D

EP 2 919 510 A1

# Fig. 3A

**200**

Start

Collect the congestion statistics | S1

100 ms elapsed since last reporting | S2 | No

Yes | S1-1a

Send collected statistics to RNC-side Iub FP in a CA CF

# Fig. 3B

Start

S1-1a

Congestion report arrived from RBS | No

S1-2 | Yes

Collect *momentary* $CB_{policer}$ from Policer Token Bucket

S1-3, S1-4

Calculate *momentary* $CB_{TN}$, *avg. CB*, **and** *R dropper bucket*

S1-4a

Send *R dropper bucket* to Policer Token Bucket

EP 2 919 510 A1

# Fig. 3C

**200**

Start

S1-5a

New R dropper bucket arrived

No

Yes

S1-5b

R dropper bucket > 0 [bps]

No

S1-5c

**Stop policing**

Yes

S1-5d

**Update** bucket rate **and** maximum bucket size

EP 2 919 510 A1

# Fig. 3D

**200**

to S1-6a

from S1-6d

**S1-6a** — New RLC SDU arrived — No

**S1-7a** — RLC PDU is waiting to be retransmitted — No

Yes

**S1-6b** — Bucket level > SDU size [bit] — No

Yes

**S1-7b** — Bucket level > an RLC PDU to be retransmitted [bit] — No

**S1-7c** — Allow the retransmission of the RLC PDU

Yes

**S1-6c** — Drop RLC SDU from SDU buffer

**S1-7d** — Prohibit the retransmission of RLC PDU

**S1-6d** — Update *bucket level* and *nr. of bytes dropped*

from S1-7d — to S1-7a

EP 2 919 510 A1

**Fig. 4**

MEM 20012

Data structure 300

| 7 | | 0 |
|---|---|---|
| Spare bits 7-6 | Congestion Status | CmCH-PI |
| Maximum MAC-d PDU Length | | |
| Maximum MACd PDU Length (cont) | | HS-DSCH Credits |
| HS-DSCH Credits (cont) | | |
| HS-DSCH Interval | | |
| HS-DSCH Repetition Period | | |
| **F2** Number of missing IuB DFs | **F1** | SN |
| **F4** Avg. size of missing DFs | **F2** Number of missing IuB DFs | |
| **F4** Avg. size of missing DFs | | |
| **F3** Number of DFs received | | |
| **F3** Number of DFs received | | |

EP 2 919 510 A1

Europäisches
Patentamt
European
Patent Office
Office européen
des brevets

## EUROPEAN SEARCH REPORT

Application Number

EP 14 00 0841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SZILVESZTER NADAS ET AL: "Providing Congestion Control in the Iub Transport Network for HSDPA", GLOBAL TELECOMMUNICATIONS CONFERENCE, 2007. GLOBECOM '07. IEEE, IEEE, PISCATAWAY, NJ, USA, 1 November 2007 (2007-11-01), pages 5293-5297, XP031196931, DOI: 10.1109/GLOCOM.2007.145 ISBN: 978-1-4244-1042-2 * sections B and C and D; page 5293; figure 1 * ----- | 1-18 | INV. H04W28/02 H04L12/813 H04L12/825 ADD. H04L12/819 |

TECHNICAL FIELDS
SEARCHED (IPC)

H04W
H04L

The present search report has been drawn up for all claims

| Place of search | Date of completion of the search | Examiner |
|---|---|---|
| The Hague | 12 September 2014 | Tsuchiya, Kuni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)